Europäisches Patentamt

European Patent Office

Office européen des brevets

(11) Veröffentlichungsnummer : **0 389 516 B1**

(12) **EUROPÄISCHE PATENTSCHRIFT**

(45) Veröffentlichungstag der Patentschrift :
**12.02.92 Patentblatt 92/07**

(51) Int. Cl.⁵ : **E04H 6/24,** B65G 1/04

(21) Anmeldenummer : **88909725.9**

(22) Anmeldetag : **18.11.88**

(86) Internationale Anmeldenummer :
**PCT/DE88/00719**

(87) Internationale Veröffentlichungsnummer :
**WO 89/04900 01.06.89 Gazette 89/12**

(54) **LAGERSYSTEM MIT EINER FÖRDEREINRICHTUNG, INSBESONDERE PARKSYSTEM FÜR FAHRZEUGE.**

(30) Priorität : **19.11.87 DE 3739158**

(43) Veröffentlichungstag der Anmeldung :
**03.10.90 Patentblatt 90/40**

(45) Bekanntmachung des Hinweises auf die
Patenterteilung :
**12.02.92 Patentblatt 92/07**

(84) Benannte Vertragsstaaten :
**AT BE CH DE FR GB IT LI LU NL SE**

(56) Entgegenhaltungen :
**EP-A- 0 232 725**
**CH-A- 468 916**
**DE-A- 1 811 635**
**FR-A- 2 419 889**
**US-A- 2 714 456**

(73) Patentinhaber : **BLUM, Albert**
**Scheiderhöhe**
**W-5204 Lohmar 1 (DE)**

(72) Erfinder : **BLUM, Albert**
**Scheiderhöhe**
**W-5204 Lohmar 1 (DE)**
Erfinder : **TADDAY, Horst**
**Lüdenscheider Strasse 31**
**W-5974 Herscheid (DE)**

(74) Vertreter : **Lippert, Hans-Joachim, Dipl.-Ing. et al**
**Dipl.-Ing. W. Dahlke Dipl.-Ing. H.-J. Lippert**
**Patentanwälte Frankenforster Strasse 137**
**W-5060 Bergisch Gladbach 3 (DE)**

EP 0 389 516 B1

EP 0 389 516 B1

## Beschreibung

Die Erfindung betrifft ein Lagersystem mit einer Fördereinrichtung zum Befördern von in einer Eingangsstelle eingebrachten schweren Gegenständen zu in mindestens einer Ebene über- und nebeneinander angeordneten Abstellplätzen und von dem jeweiligen Abstellplatz zu einer Ausgangsstelle, insbesondere in einem Parkhaus zum selbsttätigen Ein- und Ausparken von Fahrzeugen, mit einem Liftsystem aus mindestens einem turmartigen Gestell, das sich über die gesamte Höhe des Lagersystems erstreckt und entlang einer horizontalen Führung verfahrbar ist, einer in dem turmartigen Gestell angeordneten Aufnahmeeinrichtung, die entlang einer vertikalen Führung auf- und abfahrbar ist, zwei parallel zueinander verlaufenden, in der Aufnahmeeinrichtung auf gegenüberliegenden Seiten angeordneten Rollenschienen, die senkrecht zu der horizontalen Führung des turmartigen Gestells liegen, sowie in den einzelnen Abstellplätzen angeordneten stationären Rollenschienen, zu denen die Rollenschienen der Aufnahmeeinrichtung ausrichtbar sind.

Bei einem bekannten Lagersystem (US-A 2 714 456), welches für Parkhäuser konzipiert ist, ist eine hydraulisch betätigbare Hubplattform vorgesehen. Auf dieser ist ein gesonderter horizontal verfahrbarer Transportwagen angeordnet. Die in einer Eingangsstelle eingeparkten Fahrzeuge werden mit Hilfe einer Übergabeeinrichtung auf den Transportwagen gezogen, der dann mit Hilfe der Hubplattform in vertikaler Richtung in die jeweils vorgesehene Etage befördert wird. In der vorgesehenen Etage angekommen, wird der Transportwagen von der Hubplattform gelöst und in horizontaler Richtung zu dem jeweiligen Abstellplatz gefahren, wo das Fahrzeug von dem Transportwagen in seinen jeweiligen Platz geschoben wird. Dieses bekannte Parksystem ist konstruktiv äußerst aufwendig und erfordert für jeden einzelnen Einpark- bzw. Ausparkvorgang eine beträchtliche Zeit.

Ferner ist ein Lagersystem der eingangs genannten Art bekannt (DE-OS 18 11 635), welches zum Be- und Entladen von Fachregalen mit Aufnahmewannen dient. Das Be- und Entladen erfolgt mit Hilfe eines in beiden Richtungen antreibbaren Kettentriebes, der über Schwenkhaken mit den Aufnahmewannen kuppelbar ist. Ein solches Lagersystem ist nur für einfaches Lagergut, beispielsweise Stabeisen, geeignet.

Der Erfindung liegt die Aufgabe zugrunde, ein Lagersystem zu schaffen, welches mit hoher Präzision und Zuverlässigkeit auch große und empfindliche Gegenstände aufnehmen kann und mit geringem Aufwand eine schnelle Beschickung und Aufnahme ermöglicht.

Erfindungsgemäß wird diese Aufgabe dadurch gelöst, daß auf den Rollenschienen mobile Transportpaletten zum Tragen der zu lagernden Gegenstände geführt sind, daß an der Aufnahmeeinrichtung zwischen den Rollenschienen mindestens eine Übergabeeinrichtung zum Bewegen der jeweiligen Transportpalette bei der Übergabe und zum Festhalten der Transportpalette während der Beförderung auf der Aufnahmeeinrichtung angeordnet ist, daß zumindest an der Unterseite jeder Transportpalette etwa mittig und in deren Längsrichtung verlaufend eine Führungsschiene befestigt ist, deren Führungsteil nach unten gerichtet ist, und daß zu beiden Seiten des Führungsteils zur Übergabeeinrichtung gehörende Greifräder angeordnet sind, die an gegenüberliegenden Seiten des Führungsteils anlegbar und von diesen wieder abhebbar sowie gemeinsam wahlweise antreibbar und feststellbar sind.

In dem erfindungsgemäßen Lagersystem ist es möglich, die zu lagernden Gegenstände von verschiedenen Eingangsstellen zu jedem beliebigen Abstellplatz und anschließend zu verschiedenen Ausgangsstellen zu transportieren. Es ist auch ohne weiteres möglich, eine Umschichtung der Gegenstände von einem Abstellplatz zu einem anderen Abstellplatz zu vollziehen. Die horizontale sowie die vertikale Transportbewegung werden mit einem einzigen Gestell durchgeführt, das sehr einfach im Aufbau sein kann. Durch Überlagerung der horizontalen mit der vertikalen Förderbewegung können die Gegenstände innerhalb des Lagersystems auf kürzestem, direktem Wege von Platz zu Platz befördert werden. Da die Gegenstände auf Transportpaletten befördert werden, auf denen sie auch in den Abstellplätzen verbleiben, ist ein sehr einfaches bauliches System möglich. Die Abstellplätze brauchen keine festen Stellböden zu haben, sondern es genügt ein System aus einzelnen Tragschienen, die Teil eines Traggerüstes sein können. Besonders einfach ist die Übergabe einer Transportpalette von der Aufnahmeeinrichtung in den jeweiligen Abstellplatz bzw. umgekehrt unter Zuhilfenahme der Greifräder, die an die Führungsschiene der Transportpalette anlegbar sind. Die Greifräder dienen im festgestellten Zustand gleichzeitig als Bremse und halten die Transportpalette auf dem Weg von einem Abstellplatz zum anderen fest.

Die Greifräder sitzen zweckmäßig an einem in Längsrichtung der Aufnahmeeinrichtung verschiebbaren Haltesystem.

Das Haltesystem kann mit Hilfe einer an der Aufnahmeeinrichtung unterhalb der Ebene der Transportpalette angeordneten Spindeltrieb-Zylindereinrichtung verschiebbar sein.

Die einander gegenüberliegenden Greifräder sind zweckmäßig an je einer Schwenkhebeleinrichtung gelagert, die an dem Haltesystem sitzt. Die Schwenkhebeleinrichtungen der beiden einander gegenüberliegenden Greifräder können dabei über zwei weitere Verbindungshebel zu einem doppelten Kniehebelgelenk verbunden

2

sein, wodurch zwischen dem Lagerpunkt der beiden Verbindungshebel und dem Haltesystem ein gemeinsamer Klemmantrieb entsteht. Als Klemmantrieb kann eine Spindeltrieb-Zylindereinrichtung vorgesehen sein.

Um ein geräuscharmes und stoßfreies Arbeiten der Fördereinrichtung zu erzielen, können die Greifräder gummibereift sein.

Bei einem Lagersystem, bei dem die Abstellplätze in zwei einander gegenüberliegenden vertikalen Ebenen untergebracht sind und die Fördereinrichtung zwischen den beiden Ebenen angeordnet ist, kann die Aufnahmeeinrichtung für die auf gegenüberliegenden Seiten angeordneten Abstellplätze je eine gesonderte Übergabeeinrichtung aufweisen, so daß die jeweilige Transportpalette wahlweise zur einen oder anderen Seite befördert werden kann. Gleichzeitig können Transportpaletten von gegenüberliegenden Seiten wahlweise auf die Aufnahmeeinrichtung übernommen werden.

Die erfindungsgemäße Konstruktion kann für sämtliche Lagersysteme, insbesondere für die sogenannten chaotischen Lagersysteme, verwendet werden, wenn es gilt, relativ schwere Teile in Magazinen zu lagern. Auch in Parkhäusern läßt sich das erfindungsgemäße Lagersystem ohne weiteres anwenden.

Bei Parkhäusern tritt jedoch noch die Besonderheit auf, daß die Freiplätze, insbesondere in der Ein- und Ausfahrtebene, nach Möglichkeit immer mit einer Palette versehen sein sollten, um Unfälle und Beschädigungen von Kraftfahrzeugen zu vermeiden. Zu diesem Zweck kann an der in dem turmartigen Gestell geführten Aufnahmeeinrichtung zu den bereits beschriebenen Rollenschienen ein zweites Paar Rollenschienen zum Tragen einer Ersatz-Transportpalette angeordnet sein, die nach der Entnahme einer mit einem Kraftfahrzeug besetzten Transportpalette an deren Stelle eingesetzt wird. Die Ersatz-Transportpalette weist die gleichen Merkmale auf wie die übrigen Transportpaletten.

Vorzugsweise ist die Übergabeeinrichtung zwischen den übereinander liegenden Paaren der Rollenschienen angeordnet und kann somit zur wahlweisen Übergabe beider Transportpaletten verwendet werden.

Zweckmäßig ist auch an der Oberseite von zumindest der unteren Transportpalette mittig und parallel zu der an der Unterseite vorgesehenen Führungsschiene eine weitere Führungsschiene vorgesehen, deren Führungsteil nach oben gerichtet ist, wobei die Übergabeeinrichtung zwei weitere, tieferliegende Greifräder aufweist, die auf denselben Achsen wie die oberen Greifräder sitzen und beidseitig an den nach oben weisenden Führungsteil der oberen Führungsschiene der jeweiligen unteren Transportpalette anlegbar sind. Insofern ist das Antriebsystem nach gleichem Schema ohne besonderen Mehraufwand zum Bewegen und Festhalten der beiden Paletten ausgelegt.

Die Greifräder können mit Hilfe von Kupplungen wahlweise an den antreibbaren Wellen an- bzw. von diesen abgekuppelt werden.

Eine alternative Ausführungsform kann dadurch gekennzeichnet sein, daß der vertikale Abstand zwischen dem oberen Paar der Greifräder und dem unteren Paar der Greifräder kürzer ist als der vertikale Abstand zwischen der unteren Führungsschiene der oberen Tragpalette und der oberen Führungsschiene der unteren Tragpalette und daß die beidseitigen Schwenkhebeleinrichtungen zur Kupplung mit den jeweiligen Führungsschienen anhebbar bzw. absenkbar sind.

Vorzugsweise sind dabei die Schwenkhebeleinrichtungen mit den Greifrädern in dem Haltesystem vertikal verschieblich geführt und können mittels eines Hubantriebs in der Höhe verstellt werden. Als Hubantrieb ist zweckmäßig ein Balgzylinder vorgesehen.

Es ist besonders vorteilhaft, wenn die Transportpaletten sowohl an ihrer Oberseite als auch an ihrer Unterseite Führungsschienen aufweisen. Dadurch ist es möglich, die Transportpaletten je nach Bedarf wahlweise als obere oder als untere Palette einzusetzen.

Die Erfindung ist in der Zeichnung beispielsweise veranschaulicht und im nachstehenden im einzelnen anhand der Zeichnung beschrieben. Es zeigen:

Fig. 1 ein Parkhaus, teilweise im Schnitt, welches ein automatisches Lagersystem mit einer Fördereinrichtung aufweist,

Fig. 2 die Fördereinrichtung in vergrößerter Darstellung,

Fig. 3 in vergrößerter Darstellung einen Ausschnitt aus der in Fig. 2 dargestellten Aufnahmeeinrichtung,

Fig. 4 eine ähnliche Darstellung wie in Fig. 2, jedoch von einer anderen Ausführungsform,

Fig. 5 in vergrößerter Darstellung einen Ausschnitt aus der in Fig. 4 dargestellten Aufnahmeeinrichtung und

Fig. 6 eine ähnliche Darstellung wie in Fig. 2 einer weiteren Ausführungsform.

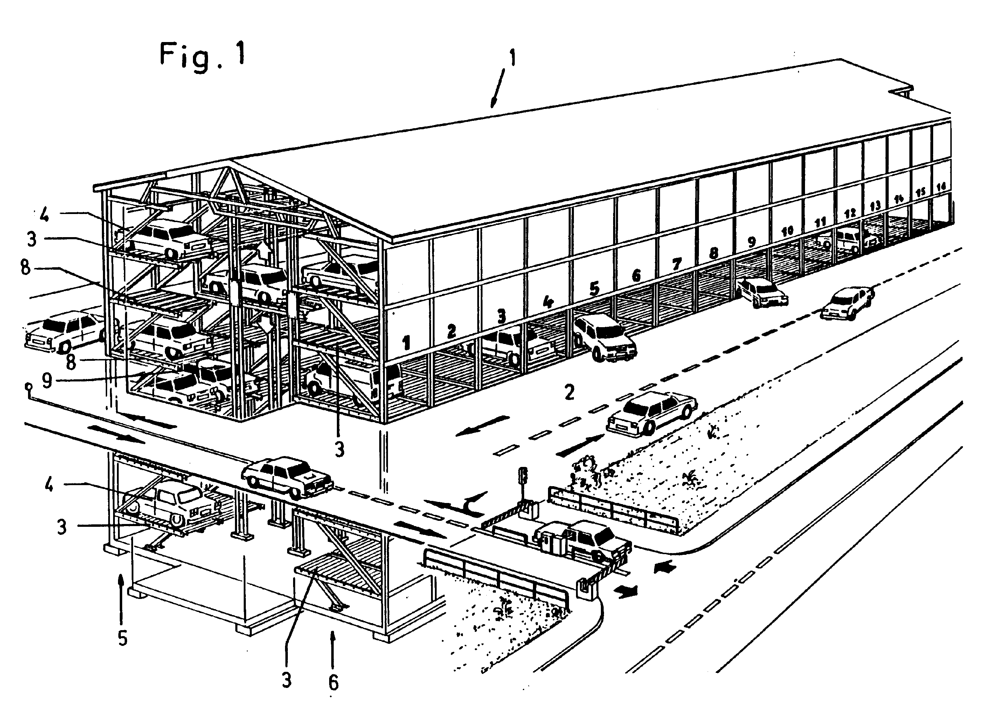

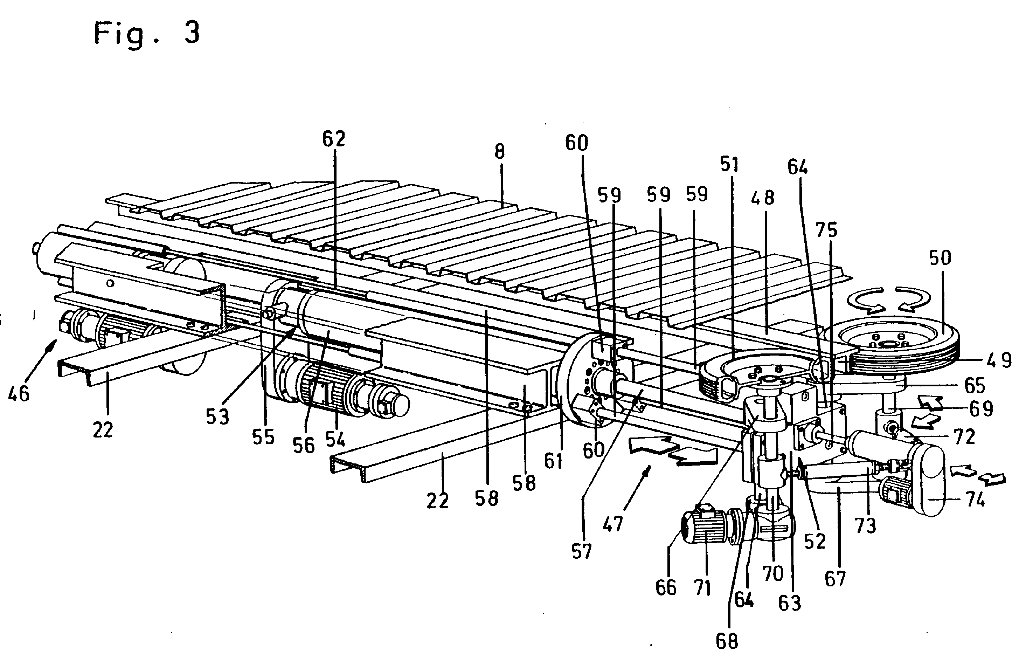

Nach Fig. 1 bis 3 der Zeichnung ist ein Parkhaus 1 mit einem Lagersystem ausgerüstet, welches in mehreren Etagen oberhalb und unterhalb des Straßenniveaus 2 Abstellplätze 3 für Fahrzeuge 4 aufweist. Die Abstellplätze 3 sind in zwei einander gegenüberliegenden vertikalen Ebenen 5 und 6 über- und nebeneinander angeordnet.

Der Innenraum des Parkhauses braucht nicht durch tragende Zwischenböden unterteilt zu sein. Es genügt ein Stahlgerüst, welches für jeden einzelnen Abstellplatz 3 zwei stationäre Rollenschienen 7 vorsieht. Die Rollenschienen 7 dienen zur Aufnahme von Transportpaletten 8, auf denen jeweils ein Fahrzeug 4 abgestellt und transportiert werden kann.

Zum Transport der beladenen bzw. unbeladenen Transportpaletten 8 dient ein System mit einem oder mehreren Liften 9, die zwischen den beiden vertikalen Reihen 5 und 6 der Abstellplätze 3 verfahrbar sind.

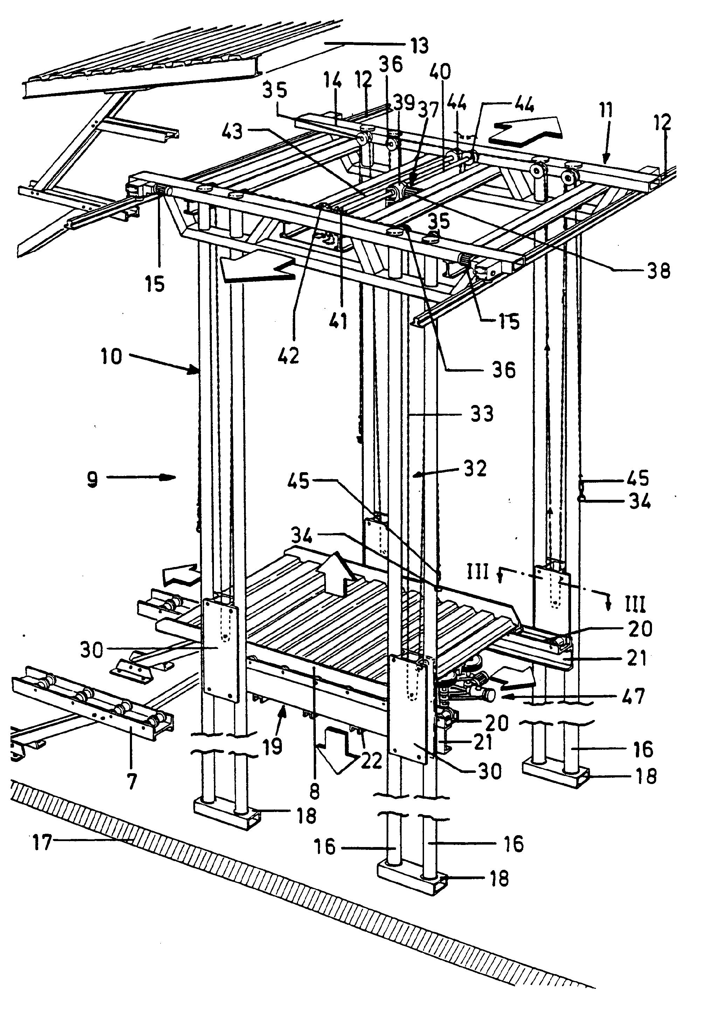

Der Lift 9 ist insbesondere in Fig. 2 im einzelnen dargestellt. Dieser besteht im wesentlichen aus einem turmartigen Gestell 10, das sich über die gesamte Höhe des Parkhauses erstreckt und sowohl die obersten als auch die untersten Abstellplätze erreichen kann.

Das turmartige Gestell 10 ist hängend an einer Laufkatze 11 angeordnet, die auf Tragschienen 12 geführt ist. Die Tragschienen 12 verlaufen in kurzem Abstand unterhalb des Daches 13 des Parkhauses 1, so daß die gesamte Höhe des Parkhauses mit in dichter Folge angeordneten Abstellplätzen 3 bestückt werden kann.

Die Laufkatze 11 besteht aus einem rechteckigen stabilen Traggestell 14, das in seinen vier Ecken über Laufräder auf den Tragschienen 12 abgestützt ist. Die in der Zeichnung nicht im einzelnen dargestellten Laufräder sind über Elektromotoren 15 im Gleichlauf antreibbar.

An dem Traggestell 14 der Laufkatze 11 sind in den vier Ecken innerhalb der Tragschienen 12 Führungsstangen 16 befestigt, die senkrecht nach unten hängen und sich bis nahe zum Boden 17 des Parkhauses 1 erstrecken. Die Führungsstangen 16 sind jeweils paarweise angeordnet, und zwar in Ebenen, die quer zur Laufrichtung der Laufkatze 11 liegen. Die unteren Enden der Führungsstangen 16 jedes Stangenpaares sind durch Querstücke 18 miteinander verbunden.

An den vertikalen Führungsstangen 16 ist eine Aufnahmeeinrichtung 19 auf- und abfahrbar gelagert. Die Aufnahmeeinrichtung 19 besteht im wesentlichen aus zwei Rollenschienen 20, die senkrecht zu der horizontalen Bewegungsrichtung der Laufkatze angeordnet sind und zur Aufnahme einer Transportpalette 8 dienen. Die beiden Rollenschienen 20 sind jeweils auf dem oberen Schenkel eines U-Profils 21 befestigt, die über Querstege 22 starr miteinander verbunden sind.

Zur Führung der Aufnahmeeinrichtung 19 an den vertikalen Führungsstangen 16 dienen Führungsrollen, die im einzelnen nicht näher dargestellt sind.

Die Führungsrollen jeder einzelnen Rollenführung sitzen an einem gemeinsamen Tragrahmen 30, der seitlich an der Aufnahmeeinrichtung 19 befestigt ist.

Jeder der Tragrahmen 30 dient gleichzeitig zur Lagerung einer losen Rolle 31 für einen flaschenzugartigen Hubtrieb zum Heben und Senken der Aufnahmeeinrichtung 19.

Die vier Hubtriebe sind bei dem in der Zeichnung dargestellten Ausführungsbeispiel als Ketten-Flaschenzüge 32 ausgebildet. Die Ketten 33 sitzen an seitlichen Befestigungsstellen 34 an den jeweils äußeren vertikalen Führungsstangen 16, laufen von dort nach oben über eine feste Rollen 35, werden dort um 180° umgelenkt und laufen zu der jeweiligen losen Rolle 31, die an dem jeweiligen Tragrahmen 30 gelagert ist, und von dort wieder nach oben zu einer zweiten festen, elektromagnetischen gebremsten Rolle 36, von wo aus die Kette 33 in die Horizontale umgelenkt und zur Mitte des Traggestells 14 der Laufkatze 11 geführt ist.

Im mittleren Bereich des Traggestells 14 ist ein gemeinsamer Antrieb 37 für sämtliche vier Ketten 33 vorgesehen. Der Antrieb 37 besteht aus einem Elektromotor 38, der seine Drehzahl über ein Schneckengetriebe 39 auf eine Welle 40 überträgt. Wie in Fig. 2 dargestellt, ist die Welle 40 in kurzem Abstand vor ihrem linken Ende mit einem Zahnrad 41 versehen, welches mit einem Zahnrad 42 einer parallelen Welle 43 kämmt.

Die beiden Wellen 40 und 43 sind an ihren äußeren Enden mit insgesamt vier Kettenrädern 44 versehen, die die vier Ketten 33 der Flaschenzüge antreiben. Aufgrund des gemeinsamen Antriebs 37 ist ein absoluter Gleichlauf gewährleistet.

Um die vier Ketten 33 bei der Einrichtung der Anlage zu justieren bzw. nach einer bestimmten Zeit nachzustellen, sind in den vier Befestigungsstellen 34 der Ketten Spannschrauben 45 vorgesehen, mit denen die absolute Länge der Kette nachgestellt werden kann.

Alternativ wäre es auch selbstverständlich möglich, anstelle der Ketten 33 Seile vorzusehen, wobei die Kettenrollen dann jeweils als Seilrollen ausgebildet sein müßten.

Die Aufnahmeeinrichtung 19 kann durch Betätigung des gemeinsamen Antriebs 37 der Hubantriebe in dem Lift 9 auf- und abgefahren werden, und zwar auch gleichzeitig auch während einer Horizontalbewegung des Liftes 9. Die Paletten 8 können also jeden Stellplatz direkt auf kürzestem Weg ansteuern.

Wenn die Rollenschienen 20 der Aufnahmeeinrichtung 19 mit den stationären Rollenschienen 7 der einzelnen Abstellplätze 3 fluchtend ausgerichtet sind, kann jeweils eine in dem Lift befindliche Transportpalette 8 in einen Abstellplatz 3 eingefahren werden bzw. es kann eine Transportpalette aus einem Abstellplatz auf die Aufnahmeeinrichtung 19 des Liftes gefahren werden.

Zum Antrieb der Transportpaletten 8 dienen zwei Ubergabeeinrichtungen 46 und 47, die fest an der Aufnahmeeinrichtung 19 des Liftes befestigt sind. Die rechte Übergabeeinrichtung 47 dient zum Verschieben einer Transportpalette 8 von der Aufnahmeeinrichtung 19 des Liftes in einen auf der rechten Seite liegenden Abstellplatz bzw. zum Verschieben einer Transportpalette aus diesem Abstellplatz auf die Aufnahmeeinrichtung. Die auf der linken Seite angeordnete Übergabeeinrichtung 46 dient zur Versorgung der auf der linken Seite befindlichen Abstellplätze.

Jede der Transportpaletten 8 weist an ihrer Unterseite mittig in ihrer Verschiebungsrichtung eine im Querschnitt T-Profil-förmige Führungsschiene 48 auf, deren Führungteil 49, ein freier Steg, nach unten gerichtet ist und als Reibfläche für zwei auf gegenüberliegenden Seiten des Steges angeordnete, gummibereifte Greifräder 50 bzw. 51 dient. Die zu der jeweiligen Übergabeeinrichtung gehörenden Greifräder 50 und 51 sind wahlweise antreibbar und feststellbar. Im festgestellten Zustand dienen sie zum Festhalten einer Transportpalette 8 auf der Aufnahmeeinrichtung 19 des Liftes und im angetriebenen Zustand befördern sie eine Transportpalette 8 in einen Abstellplatz bzw. aus einem Abstellplatz auf die Aufnahmeeinrichtung 19.

Damit die Greifräder 50 und 51 die Paletten in den Abstellplätzen erreichen können, sind sie an einem in Längsrichtung der Aufnahmeeinrichtung 19 verschiebbar gelagerten Haltesystem 52 befestigt. Das Haltesystem 52 kann mit Hilfe einer an der Aufnahmeeinrichtung 19 unterhalb der Ebene der Transportpalette 8 angeordneten, elektrisch betätigbaren Spindeltrieb-Zylindereinrichtung 53 vor- und zurückgeschoben werden. Die Spindeltrieb-Zylindereinrichtung 53 besteht im wesentlichen aus einem Elektromotor 54, der über einen Kettentrieb 55 und einen in einem Zylinder 56 angeordneten Kugelgewindetrieb eine Schubstange 57 vor- und zurückschiebt. Der Zylinder 56 ist zwischen zwei Doppel-T-Profilen 58 gehaltert, die ihrerseits an den Querstegen 22 der Aufnahmeeinrichtung 19 befestigt sind.

Das Haltesystem 52 für die Greifräder 50 und 51 sitzt am Ende der Schubstange 57. Damit auch im ausgefahrenen Zustand der Übergabeeinrichtungen 46 bzw. 47 das überhängende Gewicht von der Spindeltrieb-Zylindereinrichtung 53 getragen werden kann, sind als zusätzliche Halterungen drei oder auch mehrere in gleichen Winkelabständen rund um die Schubstange 57 angeordnete Führungsrohre 59 vorgesehen, die einerseits an dem Haltesystem 52 befestigt und andererseits durch Führungsbuchsen 60 an dem Aufnahmeflansch 61 des Zylinders 56 hindurchgeführt sind.

Die Führungsrohre der Übergabeeinrichtung 47 sind genau zu den entsprechenden Führungsrohren der Übergabeeinrichtung 47 ausgerichtet, so daß die jeweiligen fluchtenden Führungsrohre 59 über Führungsstangen 62, die teleskopartig in die Führungsrohre 59 eingesteckt sind, verbunden werden können. Im Inneren der Führungsrohre 59 liegen die Führungsstangen 62 an in der Zeichnung nicht dargestellten schraubenförmigen Druckfedern an, so daß in jedem Betriebszustand eine stabile Halterung für die relativ langen Führungsrohre 59 gegeben ist.

Das Haltesystem 52 der beiden Übergabeeinrichtungen 46 bzw. 47 besteht aus einem dickwandigen Block 63, in welchem zwei vertikale Achsen 64 gelagert sind. An den unteren und oberen Enden der Achsen 64 sitzen in symmetrischer Anordnung obere Schwenkhebel 65 bzw. 66 und untere Schwenkhebel 67 bzw. 68. Die beiden Schwenkhebel 65 und 67 tragen die vertikale Achse 69 des einen Greifrades 50 und die Schwenkhebel 66 und 68 die Achse 70 des anderen Greifrades 51. An den unteren Schwenkhebeln 67 und 68 sind jeweils elektrische Getriebemotoren 71 zum Antrieb der Greifräder 50 und 51 angeordnet.

An die Achsen 70 und 71 der Greifräder 50 bzw. 51 sind Schenkel 72 bzw. 73 angelenkt, deren abgewandte Enden gelenkig mit einer Spindeltrieb-Zylindereinrichtung 74 verbunden sind. Die Schubstange 75 der Spindeltrieb-Zylindereinrichtung 74 greift stirnseitig zentral an den Block 63 des Haltesystems 52 an. Durch Betätigung der Spindeltrieb-Zylindereinrichtung 74 können also die Greifräder 50 und 51 an den Steg 49 der T-Schiene 48 angedrückt bzw. von diesem abgehoben werden.

Die Schenkel 72 und 73 sind in ihrem mittleren Bereich als Spannschlösser ausgebildet, so daß der Öffnungsweg der Greifräder 50 und 51 eingestellt bzw. nach einer bestimmten Zeit beliebig nachgestellt werden kann.

Wenn also der Lift ein in einem Abstellplatz auf einer Transportpalette 8 befindliches Fahrzeug abholen soll, werden die Rollenschienen 20 der Aufnahmeeinrichtung 19 des Liftes 9 mit den entsprechenden stationären Rollenschienen 7 des jeweiligen Abstellplatzes fluchtend ausgerichtet. Dann fährt die jeweilige Übergabeeinrichtung 46 bzw. 47 durch Betätigung der Spindeltrieb-Zylindereinrichtung 53 vor, während die Greifräder 50 und 51 ein Stück auseinandergefahren sind. Im äusgefahrenen Zustand der Übergabeeinrichtung fahren die Greifräder 50 und 51 durch Betätigung der Spindeltrieb-Zylindereinrichtung 74 zusammen und gleichzeitig werden die Räder durch Betätigung der Getriebemotoren 71 angetrieben, wodurch die jeweilige Transportpalette 8 in Richtung auf die Aufnahmeeinrichtung 19 des Liftes 9 fährt. Gleichzeitig wird durch entgegengesetzte Betätigung der Spindeltrieb-Zylindereinrichtung 53 die Übergabeeinrichtung 47 in ihre eingefahrene Position zurückgefahren. Wenn die Transportpalette 8 ihre endgültige Position in der Aufnahmeeinrichtung 19 erreicht hat, wird die Drehbewegung der Greifräder 50 und 51 gestoppt, während der Anpreßdruck der Greifräder auf den Steg 49 der T-Schiene aufrechterhalten bleibt, so daß die Transportpalette 8 auf der Aufnahmeeinrichtung 19 festgehalten wird. Zur zusätzlichen Halterung können auch die Greifräder der zweiten Übergabeeinrichtung 46 mit dem Steg 49 in festen Griff gebracht werden.

Das Entladen der Transportpalette 8 von der Aufnahmeeinrichtung 19 des Liftes in einen Abstellplatz geschieht in genau umgekehrter Weise.

Die oben beschriebene, in Fig. 1 bis 3 dargestelle Konstruktion eignet sich gleichermaßen sowohl für beliebige Lagersysteme zur Lagerung größerer Gegenstände als auch für Parkhäuser.

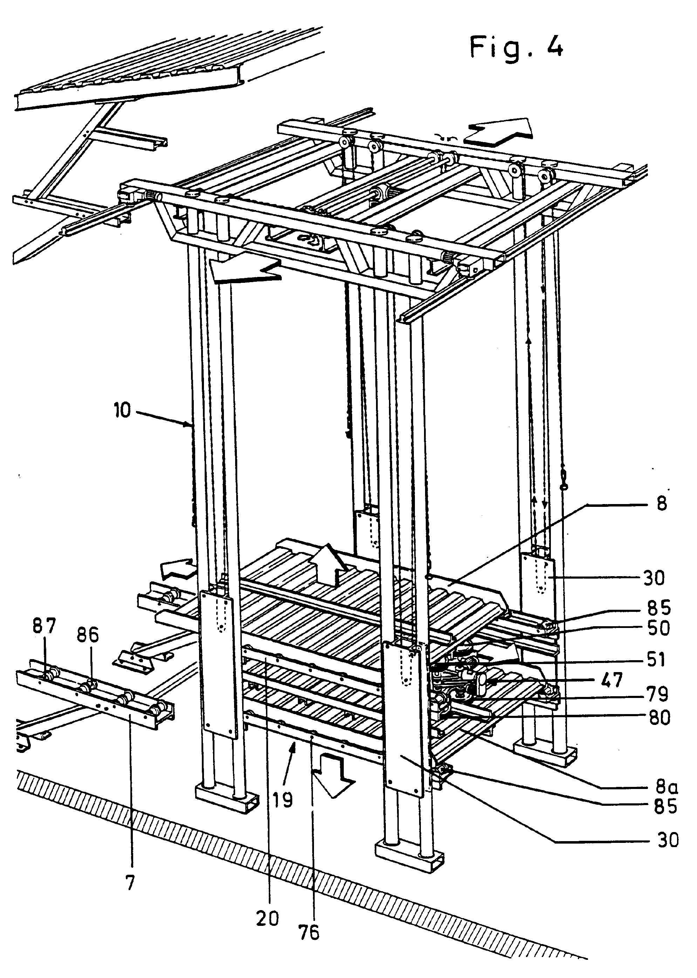

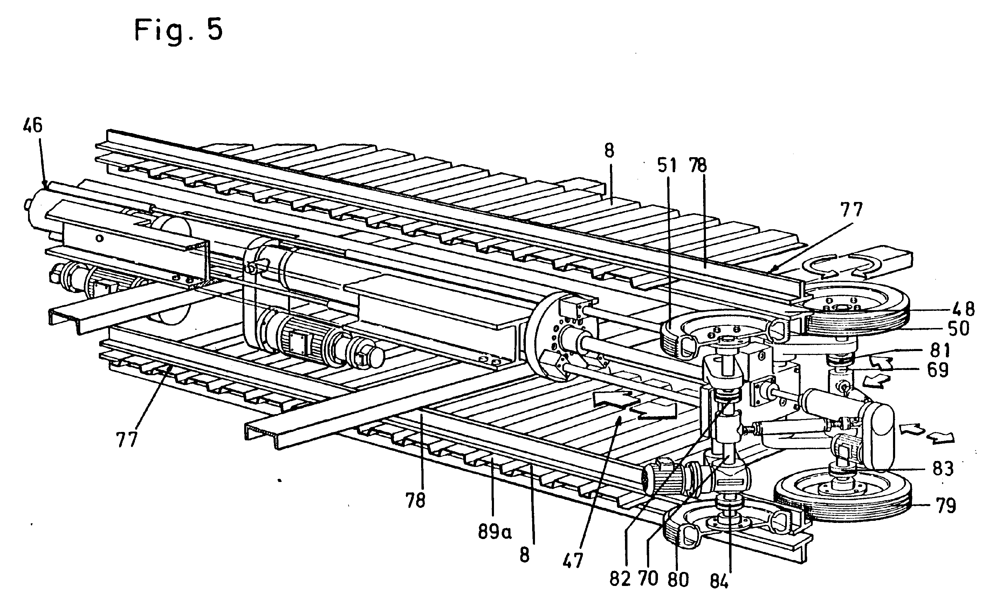

Die in Fig. 4 und 5 dargestellte abgewandelte Ausführungsform ist insbesondere für Parkhäuser konzipiert worden. Im folgenden Text sind im wesentlichen diejenigen Merkmale beschrieben worden, die von der in Fig. 1 bis 3 dargestellten Ausführungsform abweichen. Zur Verbesserung der Übersichtlichkeit sind gleiche Teile mit gleichen Positionszahlen bezeichnet worden.

Ebenso wie bei dem ersten Ausführungsbeispiel ist auch hier ein turmartiges Gestell 10 vorgesehen, das in allen Einzelheiten dem in Fig. 1 bis 3 dargestellen Gestell entspricht. Lediglich die Aufnahmeeinrichtung 19 sowie die Übergabeeinrichtungen 46 und 47 weisen einige Unterschiede auf.

Zunächst einmal sind an den vier Tragrahmen 30 zusätzlich zwei weitere Rollenschienen 76 angeordnet, die in einem Abstand unterhalb der Rollenschienen 20 seitlich an den Tragrahmen 30 befestigt sind. Die unteren Rollenschienen 76 dienen zur Aufnahme einer Ersatz-Transportpalette 8a, die sobald eine mit einem Kraftfahrzeug besetzte Transportpalette aus einem Abstellplatz herausgezogen worden ist, in den entstandenen leeren Platz eingeschoben werden kann.

Zum wahlweisen Verschieben und Festhalten der Paletten 8 und 8a dienen Übergabeeinrichtungen 46 und 47, die annähernd identisch sind mit den in Fig. 1 bis 3 beschriebenen Übergabeeinrichtungen.

Die in Fig. 4 und 5 dargestellten Übergabeeinrichtungen 46 und 47 weisen zusätzlich zu den oberen Greifrädern 50 und 51 zwei tieferliegende Greifräder 79 und 80 auf, die auf denselben Achsen 69 und 70 wie die oberen Greifräder sitzen. Bei diesem Ausführungsbeispiel lassen sich jedoch die oberen und unteren Greifräderpaare von den angetriebenen Wellen 69 und 70 wahlweise abkuppeln, und zwar mit Hilfe von elektromagnetisch betätigbaren Kupplungen 80 und 81 bzw. 83 und 84. Dadurch ist es möglich, entweder die obere Transportpalette 8 oder die untere Ersatz-Transportpalette 8a zu betätigen.

Beide Transportpaletten 8 und 8a weisen an ihrer Oberseite mittig und parallel zu der an der Unterseite vorgesehenen T-Schiene 48 eine weitere T-Schiene 77 auf, deren freier Steg 78 nach oben gerichtet ist. An diesem Steg 78 liegen die unteren Greifräder 79 und 80 an, wenn die Transportpalette als Ersatz-Palette auf den unteren Rollenschienen 76 aufliegt.

Zum Abholen eines in die Einfahrtebene in einen entsprechenden Stetlplatz eingefahrenen Kraftfahrzeugs fährt das turmartige Gestell 10, nur mit einer Ersatz-Transportpalette 8a beladen, zu dem entsprechenden Abstellplatz, wobei die oberen Rollenschienen 20 mit den entsprechenden Rollenschienen 30 des Abstellplatzes zum Fluchten gebracht werden. Nachdem die Transportpalette 8 mit dem darauf befindlichen Fahrzeug in die Aufnahmeeinrichtung 19 hineingezogen worden ist, fährt die Aufnahmeeinrichtung 19 ein Stück nach oben, bis die unteren Rollenschienen 76 mit den Rollenschienen 30 des Abstellplatzes fluchten. Dann wird die Ersatz-Transportpalette, in den freien Abstellplatz eingeschoben, so daß der entstandene freie Raum sofort wieder abgedeckt ist und ein neues Fahrzeug einfahren kann.

Der Lift fährt dann zu einem freien Abstellplatz, in welchem das Fahrzeug abgestellt werden soll. Dabei werden zunächst einmal die unteren Rollenschienen 76 zu den Rollenschienen 30 des Abstellplatzes ausgerichtet, so daß die dort befindliche Transportpalette als Ersatz-Transportpalette 8a in die Aufnahmeeinrichtung 19 eingezogen werden kann. Dann senkt sich die Aufnahmeeinrichtung 19 etwas ab, bis die oberen Rollenschienen 20 zu den Rollenschienen 30 ausgerichtet sind, so daß die mit dem Fahrzeug beladene Transportpalette 8 auf die nunmehr freien Rollenschienen 7 geschoben werden kann. Danach ist der Lift für einen neuen Entnahmevorgang vorbereitet.

Während in den Rollenschienen 20 und 76 der Aufnahmeeinrichtung 19 jeweils nur eine Reihe von Rollen angeordnet ist, sind in den Rollenschienen 7 der einzelnen Abstellplätze jeweils zwei Rollen 86 und 87 relativ zueinander drehbar gelagert. Dadurch kommt man bei den Abstellplätzen mit der halben Anzahl von Rollenschienen 7 aus, da jeweils eine Rollenschiene 7 für zwei benachbarte Abstellplätze verwendet werden kann.

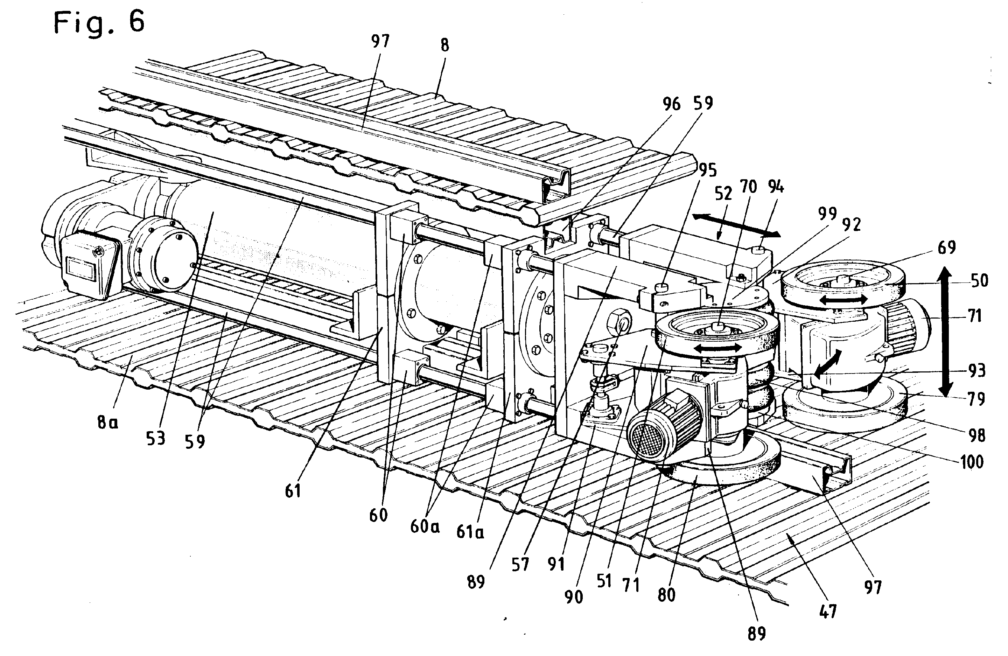

Die in Fig. 6 dargestellte Ausführungsform ist eine Variante des in Fig. 5 dargestellten Ausführungsbeispiels. Aus Gründen der besseren Übersichtlichkeit sind für alle gleichen oder äquivalenten Teile die gleichen Positionszahlen wie bei den vorangehenden Ausführungsbeispielen verwendet worden.

Bei der Ausführungsform gemäß Fig. 6 sind die auf der rechten Seite der Zeichnung dargestellte Übergabeeinrichtung 46 sowie auch die auf der gegenüberliegenden Seite angeordnete, in der Zeichnung nicht dargestellte Übergabeeinrichtung 47 für die Handhabung von jeweils zwei Paletten ausgewählt, und zwar für eine obere Palette 8, auf der beispielsweise ein Kraftfahrzeug abgestellt ist, sowie für eine untere Ersatzpalette 8a.

Zum Antrieb der jeweiligen Übergabeeinrichtung dient wiederum eine Spindeltrieb-Zylindereinrichtung 43, deren Schubstange 57 mit dem Haltesystem 52 verbunden ist. Das Haltesystem 52 besteht aus einer etwa quadratischen Tragplatte 80, an der vier parallel zu der Schubstange 57 angeordnete Kragarme 89 starr befestigt sind. Die Tragplatte 88 wird von vier Führungsrohren 59 geführt, die in Führungsbuchsen 60 bzw. 60a laufen. Jedem Führungsrohr 59 sind dabei zwei Führungsbuchsen 60 und 60a zugeordnet, so daß eine sehr stabile Führung für das Haltesystem 52 gegeben ist.

Die beiden Greifräderpaare 50 und 51 bzw. 79 und 80 sitzen jeweils an gegenüberliegenden Schwenkplatten 90 bis 93. Die auf der rechten Seite angeordneten Schwenkplatten 92 und 93 sind über eine gemeinsame vertikale Schwenkachse 94 gelagert, die zwischen den beiden rechten Kragarmen 89 befestigt ist, während die beiden linken Schwenkplatten 90 und 91 auf einer gemeinsamen Schwenkachse 95 sitzen, die zwischen den beiden linken Kragarmen 89 befestigt ist. Die jeweils miteinander verbundenen Schwenkplattenpaare tragen die Achsen 69 bzw. 70, auf denen die Greifräder befestigt sind. Die Achsen 69 und 70, die nicht durch Kupplungen unterbrochen werden können, werden mit Hilfe von Getriebemotoren 71 angetrieben.

Der vertikale Abstand zwischen den oberen Greifrädern 50 bzw. 51 und den unteren Greifrädern 79 bzw. 80 ist kürzer ausgebildet als der Abstand zwischen der unteren Führungsschiene 96 der oberen Tragplatte 8 und der oberen Führungsschiene 96 der unteren Tragplatte 8a. Die die Greifräder tragenden Schwenkplattenpaare 90 und 91 bzw. 92 und 93 sind nicht nur drehbar, sondern auch vertikal verschieblich auf den Schwenkachsen 94 bzw. 95 gelagert. Dadurch können die Greifradpaare 50 und 51 bzw. 79 und 80 wahlweise mit den Führungsschienen 96 und 97 in Kontakt gebracht werden.

In Fig. 6 sind die Greifräder in einer mittleren inaktiven Stellung gezeigt, in der sie weder die Führungsschiene 96 noch die Führungsschiene 97 berühren.

Zum vertikalen Antrieb der die Greifräder tragenden Schwenkplattenpaare dient ein Balgzylinder 98, dessen Endplatten 99 und 100 an den oberen bzw. unteren Kragarmen 89 befestigt sind.

Alle Tragpaletten 8 bzw. 8a sind sowohl an der Oberseite mit Führungsschienen 97 und an der Unterseite mit Führungsschienen 96 versehen, so daß jede Palette sowohl als obere als auch als untere Palette verwendet werden kann. Bei dem in Fig. 6 dargestellten Ausführungsbeispiel weisen die Führungsschienen ein kastenförmiges Profil auf.

Ein Einzelzyklus einer Aufnahmeeinrichtung 19, wie sie in Fig. 6 dargestellt ist, läuft wie folgt ab: Die Spindeltrieb-Zylindereinrichtung 53 fährt das Haltesystem 52 mit den daran befindlichen Greifrädern aus. Die Greifräder fahren in ihre angehobene Position und ergreifen die untere Führungsschiene 96 einer beladenen Palette. Dann fährt die Aufnahmeeinrichtung ein Stück nach oben, bis die untere Ersatzpalette 8a auf das gleiche Niveau kommt wie zuvor die obere Palette, und dann wird die Ersatzpalette als Leerpalette ausgestoßen, um den freigewordenen Raum durch eine neue Palette zu ersetzen. Das bei diesem Vorgang vorgefahrene Haltesystem 52 wird danach wieder zurückgezogen. Dann wird die Aufnahmeeinrichtung 19, gegebenenfalls in einem überlagerten Vorgang, horizontal und vertikal bis zu dem anzusteuernden Abstellplatz verfahren. Sobald die gewünschte Position der Aufnahmeeinrichtung erreicht ist, wird das Haltesystem 52 wieder durch Betätigung der Spindeltrieb-Zylindereinrichtung 53 ausgefahren, und die Greifräder ziehen zunächst eine Leerpalette in das untere Fach der Aufnahmeeinrichtung. Gegebenenfalls nach einer kurzen Verweilzeit wird die Aufnahmeeinrichtung ein Stück abgesenkt, bis die beladene Palette ihr vorgeschriebenes Niveau einnimmt. In dieser Stellung wird die beladene Palette ausgestoßen, und anschließend wird das Haltesystem durch erneute Betätigung der Spindeltrieb-Zylindereinrichtung wieder zurückgezogen, so daß die Aufnahmeeinrichtung zu einem neuen Ziel gefahren werden kann.

## Bezugszeichenliste

1 Parkhaus
2 Straßenniveau
3 Abstellplätze
4 Fahrzeuge
5 vertikale Ebene
6 vertikale Ebene
7 stationäre Rollenschienen
8 Transportpalette
8a Ersatz-Transportpalette
9 Liftsystem
10 turmartiges Gestell
11 Laufkatze
12 Tragschienen
13 Dach
14 Traggestell
15 Elektromotoren
16 Führungsstangen
17 Boden

EP 0 389 516 B1

18 Querstücke
19 Aufnahmeeinrichtung
20 Rollenschienen
21 U-Profil
22 Querstege
30 Tragrahmen
31 lose Rolle
32 Ketten-Flaschenzug
33 Ketten
34 Befestigungsstellen
35 feste Rolle
36 feste Rolle
37 Antrieb
38 Elektromotor
39 Schneckengetriebe
40 Welle
41 Zahnrad
42 Zahnrad
43 Welle
44 Kettenräder
45 Spannschrauben
46 Übergabeeinrichtung
47 Übergabeeinrichtung
48 Führungsschiene
49 Führungsteil
50 Greifrad
51 Greifrad
52 Haltesystem
53 Spindeltrieb-Zylindereinrichtung
54 Elektromotor
55 Kettentrieb
56 Zylinder
57 Schubstange
58 Doppel-T-Profile
59 Führungsrohre
60 Führungsbuchsen
60a Führungsbuchsen
61 Aufnahmeflansch
61a Aufnahmeflansch
62 Führungsstangen
63 Block
64 Achse
65 oberer Schwenkhebel
66 oberer Schwenkhebel
67 unterer Schwenkhebel
68 unterer Schwenkhebel
69 Achse
70 Achse
71 Getriebemotoren
72 Schenkel
73 Schenkel
74 Spindeltrieb-Zylindereinrichtung
75 Schubstange
76 Rollenschienen
77 Führungsschiene
78 Steg
79 Greifrad
80 Greifrad

8

81 Kupplung

82 Kupplung

83 Kupplung

84 Kupplung

85 Rollen

86 Rollen

87 Rollen

88 Tragplatte

89 Kragarme

90 Schwenkplatten

91 Schwenkplatten

92 Schwenkplatten

93 Schwenkplatten

94 Schwenkachse

95 Schwenkachse

96 Führungsschiene

97 Führungsschiene

98 Balgzylinder

99 Endplatte

100 Endplatte

## Patentansprüche

1. Lagersystem mit einer Fördereinrichtung zum Befördern von in einer Eingangsstelle eingebrachten schweren Gegenständen zu in mindestens einer Ebene über- und nebeneinander angeordneten Abstellplätzen (3) und von dem jeweiligen Abstellplatz (3) zu einer Ausgangsstelle, insbesondere in einem Parkhaus (1) zum selbsttätigen Ein- und Ausparken von Fahrzeugen (4), mit einem Liftsystem (9) aus mindestens einem turmartigen Gestell (10), das sich über die gesamte Höhe des Lagersystems erstreckt und entlang einer horizontalen Führung verfahrbar ist, einer in dem turmartigen Gestell (10) angeordneten Aufnahmeeinrichtung (19), die entlang einer vertikalen Führung auf- und abfahrbar ist, zwei parallel zueinander verlaufenden, in der Aufnahmeeinrichtung (19) auf gegenüberliegenden Seiten angeordneten Rollenschienen (20), die senkrecht zu der horizontalen Führung des turmartigen Gestells (10) liegen, sowie in den einzelnen Abstellplätzen (3) angeordneten stationären Rollenschienen (7), zu denen die Rollenschienen (20) der Aufnahmeeinrichtung (19) ausrichtbar sind, **dadurch gekennzeichnet**, daß auf den Rollenschienen (20, 7) mobile Transportpaletten (8) zum Tragen der zu lagernden Gegenstände geführt sind, daß an der Aufnahmeeinrichtung (19) zwischen den Rollenschienen (20) mindestens eine Übergabeeinrichtung (46; 47) zum Bewegen der jeweiligen Transportpalette bei der Übergabe und zum Festhalten der Transportpalette (8) während der Beförderung auf der Aufnahmeeinrichtung (19) angeordnet ist, daß zumindest an der Unterseite jeder Transportpalette (8) etwa mittig und in deren Längsrichtung verlaufend eine Führungsschiene (48; 96) befestigt ist, deren Führungsteil (49) nach unten gerichtet ist, und daß zu beiden Seiten des Führungsteils (49) zur Übergabeeinrichtung (46; 47) gehörende Greifräder (50, 51) angeordnet sind, die an gegenüberliegenden Seiten des Führungsteils (49) anlegbar und von diesem wieder abhebbar sowie gemeinsam wahlweise antreibbar und feststellbar sind.

2. Lagersystem nach Anspruch 1, **dadurch gekennzeichnet**, daß die Greifräder (50, 51) an einem in Längsrichtung der Aufnahmeeinrichtung (19) verschiebbaren Haltesystem (52) sitzen.

3. Lagersystem nach Anspruch 2, **dadurch gekennzeichnet**, daß das Haltesystem mit Hilfe einer an der Aufnahmeeinrichtung (19) unterhalb der Ebene der Transportpalette (8) angeordneten Spindeltrieb-Zylindereinrichtung (53) verschiebbar ist.

4. Lagersystem nach Anspruch 2 oder 3, **dadurch gekennzeichnet**, daß die einander gegenüberliegenden Greifräder (50, 51) an je einer Schwenkhebeleinrichtung (65, 67; 66, 68) gelagert sind, die an dem Haltesystem (52) sitzt.

5. Lagersystem nach Anspruch 4, **dadurch gekennzeichnet,** daß die Schwenkhebeleinrichtungen (65, 67; 66, 68) der beiden einander gegenüberliegenden Greifräder (50, 51) über zwei weitere Verbindungshebel (72, 73) zu einem doppelten Kniehebelgelenk verbunden sind und daß zwischen dem Lagerpunkt der beiden Verbindungshebel (72, 73) und dem Haltesystem (52) ein gemeinsamer Klemmantrieb (74) angeordnet ist.

6. Lagersystem nach einem der Ansprüche 1 bis 5, **dadurch gekennzeichnet**, daß als Klemmantrieb eine Spindeltrieb-Zylindereinrichtung (74) vorgesehen ist.

7. Lagersystem nach einem der Ansprüche 1 bis 6, **dadurch gekennzeichnet**, daß die Greifräder (50, 51) gummibereift sind.

8. Lagersystem nach einem der Ansprüche 1 bis 7, wobei die Abstellplätze in zwei einander gegenüberliegenden vertikalen Ebenen angeordnet sind, **dadurch gekennzeichnet**, daß die Aufnahmeeinrichtung (19) für die auf gegenüberliegenden Seiten angeordneten Abstellplätze (3) je eine gesonderte Übergabeeinrichtung (46; 47) aufweist.

9. Lagersystem nach einem der Ansprüche 1 bis 8, **dadurch gekennzeichnet**, daß an der Aufnahmeeinrichtung (19) in einem vertikalen Abstand zu den Rollenschienen (20) ein zweites Paar Rollenschienen (76) zum Tragen einer Ersatz-Transportpalette (8a) angeordnet ist.

10. Lagersystem nach Anspruch 9, **dadurch gekennzeichnet**, daß die Übergabeeinrichtung (46; 47) zwischen den übereinander angeordneten Paaren der Rollenschienen (20) angeordnet und zur wahlweisen Übergabe einer der beiden Transportpaletten (8, 8a) vorgesehen ist.

11. Lagersystem nach Anspruch 10, **dadurch gekennzeichnet**, daß an der Oberseite von zumindest der unteren Transportpalette (8a) mittig und parallel zu der an der Unterseite vorgesehenen Führungsschiene (48; 96) eine weitere Führungsschiene (77; 97) vorgesehen ist, deren Führungsteil (78) nach oben gerichtet ist, und daß die Übergabeeinrichtung (46; 47) zwei weitere, tieferliegende Greifräder (79, 80) aufweist. die auf denselben Achsen (69, 70) wie die oberen Greifräder (50, 51) sitzen und beidseitig an den nach oben weisenden Führungsteil (78) der oberen Führungsschiene (77; 97) der jeweiligen unteren Transportpalette (8a) anlegbar sind.

12. Lagersystem nach Anspruch 11, **dadurch gekennzeichnet**, daß die Greifräder (50, 51, 79, 80) mit Hilfe von Kupplungen (81, 82, 83, 84) wahlweise an die antreibbaren Wellen (69, 70) an- bzw. von diesen abkuppelbar sind.

13. Lagersystem nach Anspruch 11, **dadurch gekennzeichnet**, daß der vertikale Abstand zwischen dem oberen Paar der Greifräder (50, 51) und dem unteren Paar der Greifräder (79, 80) kürzer ist als der vertikale Abstand zwischen der unteren Führungsschiene (96) der oberen Tragplatte (8) und der oberen Führungsschiene (97) der unteren Tragplatte (8a) und daß die beidseitigen Schwenkhebeleinrichtungen (90, 91 bzw. 92, 93) zum Erfassen der jeweiligen Führungsschiene (96 bzw. 97) anhebbar bzw. absenkbar sind.

14. Lagersystem nach Anspruch 13, **dadurch gekennzeichnet**, daß die Schwenkhebeleinrichtungen (90, 91 bzw. 92, 93) mit den Greifrädern in dem Haltesystem (52) vertikal verschieblich geführt und mittels eines Hubantriebs in der Höhe verstellbar sind.

15. Lagersystem nach Anspruch 14, **dadurch gekennzeichnet**, daß als Hubantrieb ein Balgzylinder (98) vorgesehen ist.

16. Lagersystem nach einem der Ansprüche 9 bis 15, **dadurch gekennzeichnet**, daß die Transportpaletten (8, 8a) sowohl an ihrer Oberseite als auch an ihrer Unterseite Führungsschienen (96 bzw. 97) aufweisen.

## Claims

1. Storing system with a conveying device for conveying heavy objects placed in an entry point to depositing spaces (3) arranged in at least one tier above and adjacent to each other and from the respective depositing space (3) to an exit point, in particular in a multi-storey car park (1) for the automatic parking and unparking of vehicles (4), with a lift system (9) consisting of at least one tower-like frame (10) which extends over the entire height of the storing system and can be moved along a horizontal guide, a receiving device (19) arranged in the tower-like frame (10) and capable of being moved up and down along a vertical guide, two roller rails (20), running parallel to each other, arranged on opposite sides in the receiving device (19) and lying perpendicular to the horizontal guide of the tower-like frame (10), as well as stationary roller rails (7) arranged in the individual depositing spaces (3) and with which the roller rails (20) of the receiving device (19) can be aligned, **characterized in** that movable transport pallets (8) for carrying the objects to be stored are guided on the roller rails (20, 7), in that at least one transfer device (46; 47) is arranged on the receiving device (19) between the roller rails (20) to move the respective transport pallet during transfer and to secure the transport pallet (8) during the conveying on the receiving device (19), in that at least on the underside of each transport pallet (8) approximately centrally and running in its longitudinal direction, a guide rail (48; 96) is fastened, the guide part (49) of which points downwards, and in that gripping wheels (50, 51) belonging to the transfer device (46; 47) are arranged on both sides of the guide part (49) and can be applied against opposite sides of the guide part (49) and lifted off from the latter again, and can be selectively driven and immobilized together.

2. Storing system according to claim 1, **characterized in** that the gripping wheels (50, 51) are seated on a holding system (52) displaceable in the longitudinal direction of the receiving device (19).

3. Storing system according to claim 2, **characterized in** that the holding system is displaceable via a spindle-driven cylinder device (53) arranged on the receiving device (19) below the plane of the transport pallet (8).

4. Storing system according to claim 2 or 3, **characterized in** that the gripping wheels (50, 51) which lie opposite each other are each mounted on a swivel lever device &5, 67; 66, 68) which is seated on the holding system (52).

5. Storing system according to claim 4, **characterized in** that the swivel lever devices (65, 67; 66, 68) of the two opposite gripping wheels (50, 51) are connected via two further connecting levers (72, 73) to a double knuckle joint and in that a common locking drive (74) is arranged between the bearing point of the two connecting levers (72, 73) and the holding system (52).

6. Storing system according to one of claims 1 to 5, **characterized in** that a spindle-driven cylinder device (74) is provided as the locking drive.

7. Storing system according to one of claims 1 to 6, **characterized in** that the gripping wheels (50, 51) are rubber-tyred.

8. Storing system according to one of claims 1 to 7, where the depositing spaces are arranged in two opposite vertical planes, **characterized in** that the receiving device (19) has a separate transfer device (46; 47) for each of the depositing spaces (3) arranged on opposite sides.

9. Storing system according to one of claims 1 to 8, **characterized in** that a second pair of roller rails (76) for supporting a replacement transport pallet (8a) is arranged on the receiving device (19) at a vertical distance from the roller rails (20).

10. Storing system according to claim 9, **characterized in** that the transfer device (46; 47) is arranged between the pairs of roller rails (20) arranged above each other and is provided for the selective transfer of one of the two transport pallets (8, 8a).

11. Storing system according to claim 10, **characterized in** that on the upper side of at least the lower transport pallet (8a) centrally and parallel to the guide rail (48; 96) provided on the underside, a further guide rail (77; 97) is provided, the guide part (78) of which points upwards, and in that the transfer device (46; 47) has two further, lower-lying gripping wheels (79, 80) which are seated on the same axles (69, 70) as the upper gripping wheels (50, 51) and can be applied against both sides of the upward-facing guide part (78) of the upper guide rail (77; 97) of the respective lower transport pallet (8a).

12. Storing system according to claim 11, **characterized in** that the gripping wheels (50, 51, 79, 80) may be selectively coupled to and uncoupled from the drivable shafts (69, 70) via couplings (81, 82, 83, 84).

13. Storing system according to claim 11, **characterized in** that the vertical distance between the upper pair of gripping wheels (50, 51) and the lower pair of gripping wheels (79, 80) is shorter than the vertical distance between the lower guide rail (96) of the upper support pallet (8) and the upper guide rail (97) of the lower support pallet (8a) and in that the swivel lever devices (90, 91 and 92, 93 respectively) on both sides can be raised and lowered respectively to take hold of the respective guide rail (96 and 97 respectively).

14. Storing system according to claim 13, **characterized in** that the swivel lever devices (90, 91 and 92, 93 respectively) are guided vertically displaceably with the gripping wheels in the holding system (52) and their height can be adjusted by means of a lifting drive.

15. Storing system according to claim 14, **characterized in** that a cushion-type cylinder is provided as the lifting drive.

16. Storing system according to one of claims 9 to 15, **characterized in** that the transport pallets (8, 8a) have guide rails (96 and 97 respectively) on both their upper side and on their underside.

## Revendications

1. Système de rangement à transporteur pour l'acheminement d'objets lourds, présentés en un lieu d'accès, vers des places de garage (3) disposées au-dessus et à côté les unes des autres dans au moins un plan, et, à partir des différentes places de garage (3), vers un lieu de sortie, en particulier dans un parc de stationnement à plusieurs niveaux (1) pour la mise en stationnement et hors de stationnement de véhicules automobiles (4), comportant un système élévateur (9) se composant d'au moins une cage du type tour (10) qui s'étend sur toute la hauteur du système de rangement et qui est déplaçable le long d'un guide horizontal, d'un dispositif de réception (19) qui est disposé dans la cage du type tour (10) et qui peut monter et descendre le long d'un guide vertical, de deux rails à rouleaux (20) qui s'étendent parallèlement l'un à l'autre, sont disposés sur les côtés opposés dans le dispositif de réception (19) et sont perpendiculaires au guide horizontal de la cage du type tour (10), ainsi que de rails à rouleaux fixes (7) qui sont disposés dans les différentes places de garage (3) et dans l'alignement desquels les rails à rouleaux (20) du dispositif de réception (19) peuvent être placés, caractérisé en ce que les palettes de transport mobiles (8), destinées à porter les objets à ranger, sont guidées sur les rails à rouleaux (20, 7), en ce qu'il est disposé, sur le dispositif de réception (19) entre les rails à rouleaux (20), au moins un dispositif de transfert (46; 47) pour déplacer la palette de transport lors de son transfert et pour immobiliser la palette de transport (8) pendant son transport sur le dispositif de réception (19), en ce qu'il est fixé, au moins sur la face inférieure de chaque palette de transport (8), un rail de guidage (48; 96) qui s'étend à peu près au milieu et dans la direction longitudinale de la palette et dont la partie de guidage (49) est dirigée vers le bas, et en ce qu'il est disposé, de part et d'autre de cette partie de guidage (49), des roues preneuses (50, 51) qui font partie du dispositif de transfert (46; 47), peuvent être appliquées contre les côtés opposés de la partie de guidage (49) et être écartées de celle-ci, et, selon les nécessités, peuvent être entraînées et bloquées en commun.

2. Système de rangement selon la revendication 1, caractérisé en ce que les roues preneuses (50, 51) sont montées sur un système de support (52) qui est déplaçable dans la direction longitudinale du dispositif de réception (19).

3. Système de rangement selon la revendication 2, caractérisé en ce que le système de support est déplaçable au moyen d'un vérin à entraînement par broche filetée (53).

4. Système de rangement selon la revendication 2 ou 3, caractérisé en ce que les roues preneuses (50, 51) opposées l'une à l'autre sont montées chacune sur un dispositif à leviers pivotants (65, 67; 66, 68) qui est monté sur le système de support (52).

5. Système de rangement selon la revendication 4, caractérisé en ce que les dispositifs à leviers pivotants (65, 67; 66, 68) des deux roues preneuses (50, 51) opposées l'une à l'autre sont reliés, par l'intermédiaire de deux autres leviers d'accouplement (72, 73), à une articulation de genouillère double, et en ce qu'une commande de serrage commune (74) est disposé entre le point de montage des deux leviers d'accouplement (72, 73) et le système de support (52).

6. Système de rangement selon l'une quelconque des revendications 1 à 5, caractérisé en ce qu'il est prévu, en tant que commande de serrage, un vérin à entraînement par broche filetée (74).

7. Système de rangement selon l'une quelconque des revendications 1 à 6, caractérisé en ce que les roues preneuses (50, 51) sont munies de bandages en caoutchouc.

8. Système de rangement selon l'une quelconque des revendications 1 à 7, dans lequel les places de garage sont disposées dans deux plans verticaux opposés l'un à l'autre, caractérisé en ce que le dispositif de réception (19) comporte un dispositif de transfert distinct (46; 47) pour chacune des rangées de places de garage (3) disposées sur les côtés opposés.

9. Système de rangement selon l'une quelconque des revendications 1 à 8, caractérisé en ce qu'une seconde paire de rails à rouleaux (76), destinée à porter une palette de transport de remplacement (8a), est disposée sur le dispositif de réception à distance verticale des rails à rouleaux (20).

10. Système de rangement selon la revendication 9, caractérisé en ce que le dispositif de transfert (46; 47) est disposé entre les paires superposées de rails à rouleaux (20, 76) et est prévu pour le transfert au choix de l'une des deux palettes de transport (8, 8a).

11. Système de rangement selon la revendication 10, caractérisé en ce qu'il est prévu, sur la face supérieure de la palette de transport inférieure (8a) au moins, au milieu et parallèlement au rail de guidage (48; 96) prévu sur la face inférieure, un autre rail de guidage (77; 97) dont la partie de guidage (78) est dirigée vers le haut, et en ce que le dispositif de transfert (46; 47) comporte deux autres roues preneuses (79, 80) situées plus bas, qui sont montées sur les mêmes axes (69, 70) que les roues preneuses supérieures (50, 51) et qui peuvent être appliquées contre la partie de guidage (78) dirigée vers le haut du rail de guidage supérieur (77; 97) de la palette de transport inférieure (8a).

12. Système de rangement selon la revendication 11, caractérisé en ce que les roues preneuses (50, 51, 79, 40) sont à volonté accouplables aux arbres d'entraînement (69, 70) et désaccouplables de ceux-ci au moyen d'embrayages (81, 82, 83, 84).

13. Système de rangement selon la revendication 11, caractérisé en ce que la distance verticale entre la paire supérieure de roues preneuses (50, 51) et la paire inférieure de roues preneuses (79, 80) est plus courte que la distance verticale entre le rail de guidage inférieur (96) de la plate-forme porteuse supérieure (8) et le rail de guidage supérieur (97) de la plate-forme porteuse inférieure (8a), et en ce que les dispositifs à leviers pivotants bilatéraux (90, 91 et 92, 93) peuvent être élevés ou abaissés pour saisir le rail de guidage concerné (96 ou 97).

14. Système de rangement selon la revendication 13, caractérisé en ce que les dispositifs à leviers pivotants (90, 91 et 92, 93) avec les roues preneuses sont guidés verticalement dans le système de support (52) et sont déplaçables en hauteur au moyen d'un mécanisme de commande de levage.

15. Système de rangement selon la revendication 14, caractérisé en ce qu'il est prévu, en tant que mécanisme de commande de levage, un vérin à soufflet (98).

16. Système de rangement selon l'une quelconque des revendications 9 à 15, caractérisé en ce que les palettes de transport (8, 8a) comportent des rails de guidage (96 et 97) aussi bien sur leur face supérieure que sur leur face inférieure.

Fig. 1

# Fig. 3

EP 0 389 516 B1

Fig. 4

Fig. 5

Fig. 6